# EUROPEAN PATENT APPLICATION

(11) **EP 4 797 521 A1**
(43) Date of publication of application: **26.08.2026**
(21) Application number: 23954977.7
(22) Date of filing: 18.10.2023
(51) Int. Cl.: H02M 7/48

(54) **POWER CONVERSION SYSTEM AND CONTROL METHOD**

(71) Applicant: TMEIC Corporation, Tokyo 104-0031 (JP)
(72) Inventor: KUSUNOKI, Hironobu, Tokyo 104-0031 (JP)
(74) Representative: Winter, Brandl - Partnerschaft mbB
(86) International application number: PCT/JP2023/037669
(87) International publication number: WO 2025/083802

(57) **Abstract**

A power conversion system includes a transformer, a first power conversion device, a second power conversion device, and a control unit. The transformer has a primary winding, a secondary winding, and a tertiary winding that are magnetically coupled to each other. In the transformer, the primary winding is connected to a power source PS via a circuit breaker. The first power conversion device has a rectifier and a smoothing capacitive element for rectifying and smoothing AC power received from the secondary winding. The first power conversion device generates power to be supplied to a load using the smoothed DC power. The second power conversion device generates third AC power by switching a semiconductor switching element. The second power conversion device supplies the third AC power to the tertiary winding at least during a period from when the circuit breaker is turned off to when the circuit breaker is turned on. The control unit controls the first power conversion device, the second power conversion device, and the circuit breaker.

## Description

### TECHNICAL FIELD

Embodiments of the present invention relates to a power conversion system and a control method.

### BACKGROUND ART

Some power conversion systems include a transformer and a power conversion device that converts AC power to DC power in the main circuit. The transformer supplies AC power to the power conversion device. The power conversion device includes a rectifier, a smoothing capacitive element (such as a smoothing capacitor), and a power converter that uses DC power. However, when a main power source is turned on in the main circuit without pre-charging the capacitive element, a current of a magnitude close to that of a short circuit may flow into the capacitive element. To avoid such an event from occurring, it has been desired to reduce an inrush current when the main circuit of the power conversion system is activated.

### Citation List

### Patent Document

Patent Document 1: Japanese Unexamined Patent Application, First Publication No. 2002-345258

### SUMMARY OF INVENTION

### Technical Problem

An object of the present invention is to provide a power conversion system and a control method capable of reducing a current flowing when a main circuit is activated. Solution to Problem

The power conversion system of an embodiment includes a transformer, a first power conversion device, a second power conversion device, and a control unit. The transformer has a primary winding, a secondary winding, and a tertiary winding that are magnetically coupled to each other. In the transformer, the primary winding is connected to a power source PS via a circuit breaker. The first power conversion device has a rectifier and a smoothing capacitive element for rectifying and smoothing AC power received from the secondary winding. The first power conversion device generates power to be supplied to a load using the smoothed DC power. The second power conversion device generates third AC power by switching a semiconductor switching element. The second power conversion device supplies the third AC power to the tertiary winding at least during a period from when the circuit breaker is turned off to when the circuit breaker is turned on. The control unit controls the first power conversion device, the second power conversion device, and the circuit breaker.

### BRIEF DESCRIPTION OF DRAWINGS

[FIG. 1A] A schematic configuration diagram of a power conversion system of an embodiment.
[FIG. 1B] A schematic configuration diagram of a control device in the power conversion system of the embodiment.
[FIG. 2] A flowchart of initial charging processing of the embodiment.
[FIG. 3] A diagram for describing initial charging of the embodiment.
[FIG. 4] A diagram for describing phase continuity ensuring of an AC voltage of the embodiment.

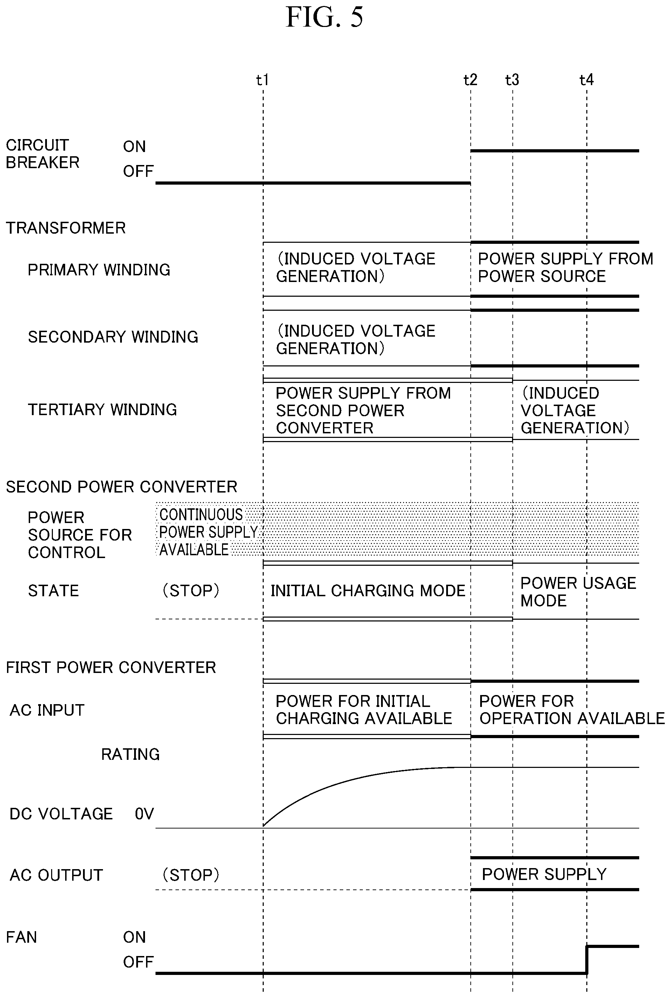

[FIG. 5] A diagram for describing the initial charging of the embodiment.

### DESCRIPTION OF EMBODIMENTS

Hereinafter, a power conversion system of an embodiment will be described with reference to the drawings.

In the following description, components having the same or similar functions are given the same reference numerals. Duplicate descriptions of these components may be omitted. Being electrically connected may simply be referred to as being "connected."

### (First embodiment)

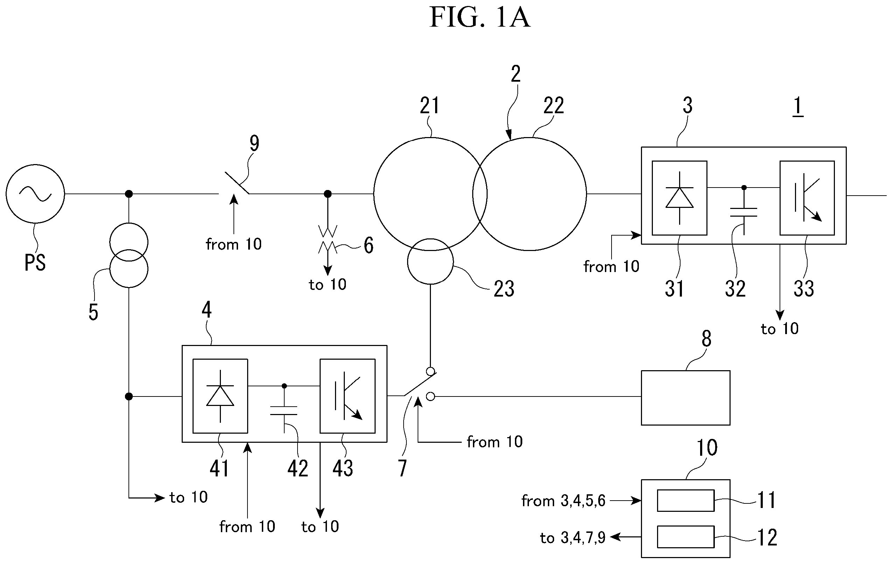

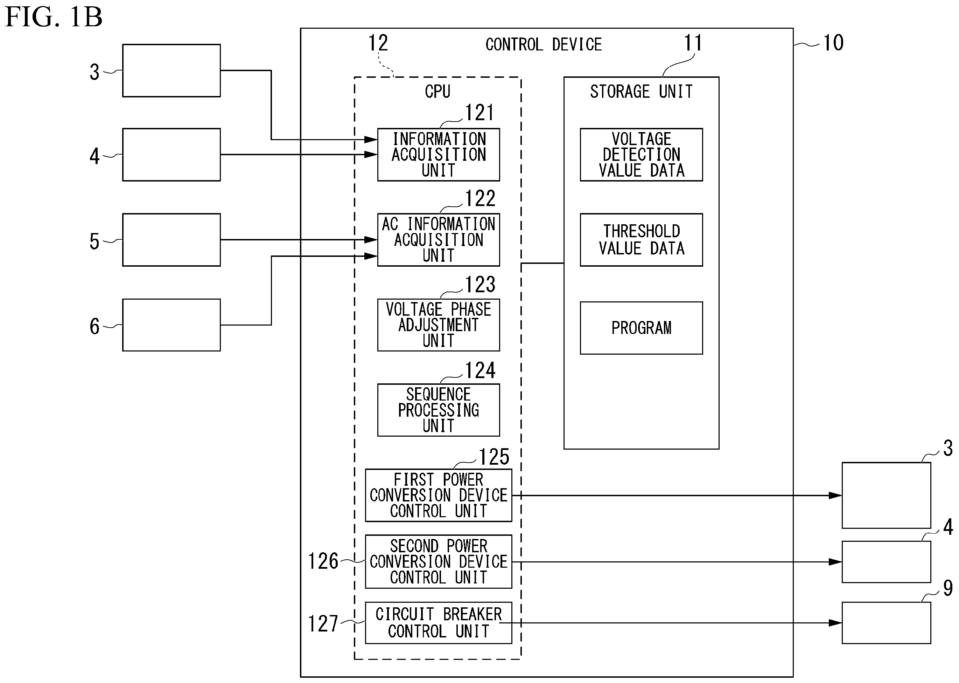

A power conversion system will be described with reference to FIGS. 1A and 1B.

FIG. 1A is a schematic diagram of a power conversion system 1 according to an embodiment. FIG. 1B is a schematic diagram of a control device 10 in the power conversion system 1 according to an embodiment.

The power conversion system 1 receives a supply of three-phase AC power from a power source PS and supplies converted power to a load.

The power conversion system 1 includes, for example, a transformer 2, a first power conversion device 3, a second power conversion device 4, and a control device 10. The power conversion system 1 may also include a transformer 5, a voltage sensor 6, a switch 7, a fan 8, and a circuit breaker 9.

The transformer 2 includes a primary winding 21, a secondary winding 22, and a tertiary winding 23 that are magnetically coupled to each other. The primary winding 21, the secondary winding 22, and the tertiary winding 23 each include a winding corresponding to each phase of the three-phase AC. For example, the primary winding 21, the secondary winding 22, and the tertiary winding 23 are described as being symmetrical to each other, but the configuration may be changed without being limited to this.

The transformer 2 is, for example, a three-phase AC transformer. The primary winding 21 is connected to the power source PS via the circuit breaker 9. The secondary winding 22 is connected to the first power conversion device 3. The tertiary winding 23 is connected to the second power conversion device 4.

The first power conversion device 3 rectifies and smoothes the AC power received from the secondary winding 22 of the transformer 2. For example, the first power conversion device 3 includes a rectifier 31 for the rectification described above, a smoothing capacitor 32 (a capacitive element), and a power conversion device 33. The AC power received from the secondary winding 22 is rectified by the rectifier 31 of the first power conversion device 3, and smoothed by the smoothing capacitor 32 to generate DC power. The power conversion device 33 uses the smoothed DC power to generate power to be supplied to a load under control of the control device 10. The rectifier 31 may be configured as a converter capable of generating a reverse power flow.

The second power conversion device 4 is supplied with control power, and uses the control power to generate the third AC power described above. For example, the control power supplied to the second power conversion device 4 may be generated by transforming an AC voltage of a power source by another transformer 5 provided separately from the transformer 2. Magnetic paths of the transformer 2 and the transformer 5 are configured independently of each other.

For example, the second power conversion device 4 includes a rectifier 41, a smoothing capacitor 42, and a power conversion device 43. The second power conversion device 4 generates third AC power by switching a semiconductor switching element included in the power conversion device 43.

An output of the second power conversion device 4 is connected to the switch 7. The switch 7 either connects the output of the second power conversion device 4 to the tertiary winding of the transformer 2, or connects the output of the second power conversion device 4 to the fan 8. This switching is controlled by the control device 10. Details regarding the control of the fan 8 will be described below.

In response to this, the transformer 2 generates a desired AC voltage based on the third AC power supplied to the tertiary winding 23 in the primary winding 21 and the secondary winding 22.

As shown in FIG. 1B, the control device 10 includes a storage unit 11 and a CPU 12.

The storage unit 11 includes a semiconductor memory, and the like, and stores voltage detection value data, threshold value data, programs, and the like.

The CPU 12 includes an information acquisition unit 121, an AC information acquisition unit 122, a voltage phase adjustment unit 123, a sequence processing unit 124, a first power conversion device control unit 125, a second power conversion device control unit 126, and a circuit breaker control unit 127.

The information acquisition unit 121 acquires information indicating states of the first power conversion device 3 and the second power conversion device 4 from the first power conversion device 3 and the second power conversion device 4. The information indicating the states of the first power conversion device 3 and the second power conversion device 4 may include a DC voltage of the first power conversion device 3 in a DC section. The information acquisition unit 121 adds the DC voltage of the first power conversion device 3 in the DC section to a voltage detection value of the storage unit 11 as time-series information.

The AC information acquisition unit 122 acquires AC voltage information from the transformer 5 and the voltage sensor 6, and adds it to a voltage detection value of the storage unit 11 as time-series information.

The voltage phase adjustment unit 123 adjusts a voltage phase of the third AC power generated by the second power conversion device 4 on the basis of AC voltage detection value information stored in the storage unit 11 so that a phase of an AC voltage of the power source PS and a phase of an AC voltage of the voltage sensor 6 are aligned.

The sequence processing unit 124 performs sequence control of various types of control required at each stage of changing the power conversion system 1 from a stopped state to an operating state, and from the operating state to the stopped state. For example, changing the power conversion system 1 from the stopped state to the operating state includes initial charging of the first power conversion device 3, control of the circuit breaker 9, and the like.

The first power conversion device control unit 125 acquires a magnitude of an output current of the first power conversion device 3, generates a drive signal for the first power conversion device 3 based on this, supplies the drive signal to the first power conversion device 3, and controls ON or OFF switching of the semiconductor switching element.

The second power conversion device control unit 126 acquires a magnitude of an output current of the second power conversion device 4, generates a drive signal for the second power conversion device 4 based on this, supplies the drive signal to the second power conversion device 4, and controls the ON or OFF switching of the semiconductor switching element. During the control described above, the second power conversion device control unit 126 adjusts the phase of the voltage of the third AC power output from the second power conversion device 4 on the basis of the phase information adjusted by the voltage phase adjustment unit 123.

The circuit breaker control unit 127 acquires a state of an auxiliary contact of the circuit breaker 9 and detects a state of the circuit breaker 9. The circuit breaker control unit 127 also controls ON or OFF switching of the circuit breaker 9.

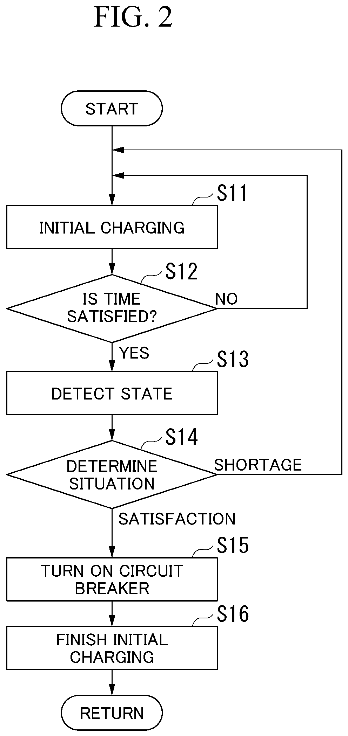

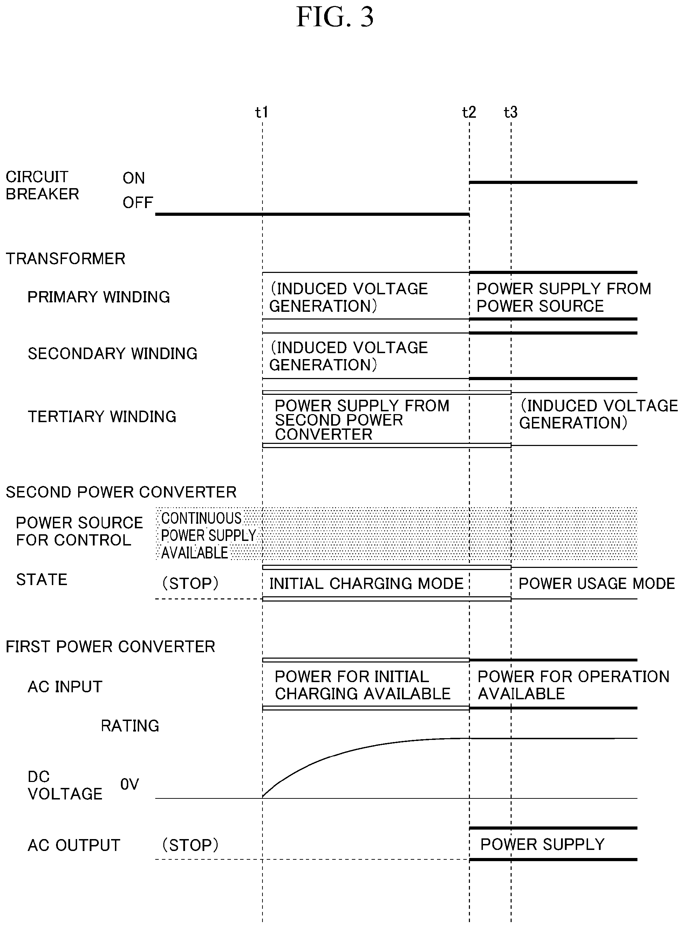

The following describes initial charging of the smoothing capacitor 32 that is performed when a main circuit of the power conversion system 1 is activated, with reference to FIGS. 2 and 3.

FIG. 2 is a flowchart of the initial charging processing of the embodiment.

FIG. 3 is a diagram for describing the initial charging of the embodiment.

Note that procedures shown in FIGS. 2 and 3 are merely examples, and the present invention is not limited to these.

A state of the circuit breaker 9, a state of the transformer 2, a state of the second power conversion device 4, and a state of the first power conversion device 3 are shown in timing charts from the top of FIG. 3.

### (Initial state)

First, an initial state of the power conversion system 1 will be summarized.

The power conversion system 1 is in an inactive state before power is supplied. More specifically, the circuit breaker 9 is open, and power supply from the power source to the main circuit including the transformer 2 and the first power conversion device 3 is stopped.

The smoothing capacitor 32 included in the first power conversion device 3 is in a discharged state.

It is assumed that the power source PS that supplies power to the power conversion system 1 is capable of supplying AC power of a specified rated voltage, and is also fully capable of supplying this AC power. To simplify the description, impedance of a power source, a wiring, or the like is sufficiently low and an inrush current may occur if the initial charging of the smoothing capacitor 32 in a discharged state has not been performed.

When the following situation occurs during the initial charging of the smoothing capacitor 32, the control device 10 will suspend turning on the circuit breaker 9 while the following situation is occurring. Alternatively, it is advisable to turn on the circuit breaker 9 after the situation is resolved.
- Case in a situation where amplitudes of an AC current flowing through the secondary winding 22 or tertiary winding 23 of the transformer 2 are asymmetrical between positive and negative currents

When such an asymmetrical situation is evident, there is a possibility that biased magnetism has occurred in a situation in which a residual magnetic flux of the transformer 2 is relatively large. When the circuit breaker 9 is turned on under such a situation, there is a possibility that a biased magnetization inrush current will occur in the transformer 2. Therefore, it is advisable to wait until the positive and negative currents described above are balanced before turning on the circuit breaker.
- Case in a situation where the current flowing through the secondary winding 22 or tertiary winding 23 of the transformer 2 is relatively large

In such a situation, there is a possibility that the initial charging of the capacitor 32 is incomplete. Therefore, it is advisable to wait until an amplitude of the current described above (a maximum value of an instantaneous value, a moving average value of an absolute value, or the like) becomes smaller than a predetermined value before turning on the circuit breaker.

### (Initial charging period)

First, an operation from a state in which the circuit breaker 9 is turned off (OFF) to a time t2 when the circuit breaker 9 is turned on will be described. As described above, the circuit breaker 9 is opened under the control of the control device 10, and a supply of power from the power source PS to the main circuit is stopped.

At a time t1, the control device 10 controls the second power conversion device 4 to supply the third AC power and start the initial charging of the capacitor 32 (S11 in FIG. 2). A control mode under the control of the control device 10 is called an initial charging mode. The second power conversion device 4 starts supplying power (the third AC power) for the initial charging of the capacitor 32 under the control of the control device 10.

The control device 10 continues the initial charging until the time t2 (S12 in FIG. 2), and detects a state at the time t2 (S13 in FIG. 2). On the basis of a result of the state detection, the control device 10 determines whether to continue the initial charging (S14 in FIG. 2), and furthermore continues the initial charging until a condition is satisfied.

For example, during an initial charging period in a state where the circuit breaker 9 is turned off, the second power conversion device 4 generates the third AC power under the control of the control device 10 and supplies it to the tertiary winding 23 of the transformer 2.

The transformer 2 transforms the third AC power supplied to the tertiary winding 23 into a voltage determined by a winding number ratio. This induces a voltage in the primary winding 21 and secondary winding 22 of the transformer 2. The first power conversion device 3 starts the initial charging of the capacitor 32 using the voltage induced in the secondary winding 22. The control device 10 may turn on the circuit breaker 9 when a result of identifying a voltage (for example, an amplitude or the like) applied to any of the windings of the transformer 2 after the third AC power is supplied to the tertiary winding 23 satisfies a predetermined condition.

When it is determined by the determination described above that it is not necessary to continue the initial charging mode, the control device 10 turns on the circuit breaker 9 to start power supply from the power source PS (S15), and finishes the initial charging in the initial charging mode of the second power conversion device 4 (S16).

As a result, after the circuit breaker 9 is turned on, the second power conversion device 4 stops the supply of the third AC power from the second power conversion device 4 to the tertiary winding 23.

It is known that an overcurrent occurs when magnetic saturation occurs in the transformer 2.

The second power conversion device 4 during the initial charging mode described above, under the control of the control device 10, limits a current value of the third AC power to a magnitude that does not cause magnetic saturation in a core of the transformer 2. The control device 10 may limit the current flowing by the third AC power to a magnitude that does not cause magnetic saturation in the core of the transformer 2, particularly during the initial charging of the capacitor 32.

For example, as one method of limiting the current value described above, vector control may be applied to control of the second power conversion device 4. This allows the second power conversion device 4 to generate an AC voltage that is adjusted to limit the current value of the third AC power.

During this initial charging mode, power is supplied to the first power conversion device 3 with the current value limited as described above, but the first power conversion device 3 is not in a state in which it can supply power to the load at this stage. When the initial charging state in the initial charging mode is completed, it is necessary to switch power supplied to the first power conversion device 3 to the power from the power source PS.

In addition, when the continuity of the AC power supplied to the first power conversion device 3 cannot be ensured when switching from the initial charging state in the initial charging mode to power (main power) from the power source PS, a magnitude of a current flowing through the transformer 2 will fluctuate. In other words, a situation in which the continuity of an AC power is ensured means that at least a phase of the AC voltage is continuous and an amplitude of the AC voltage is equal.

### (Regarding phase continuity ensuring of AC voltage when circuit breaker is turned on)

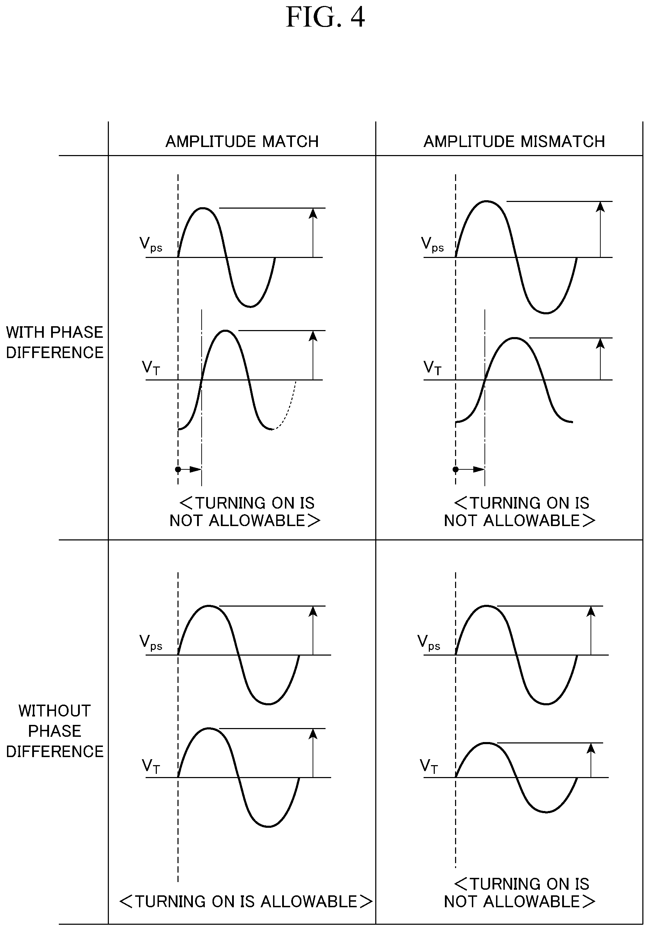

FIG. 4 is a diagram for describing phase continuity ensuring of an AC voltage in an embodiment.

By causing a phase of an AC voltage generated in the primary winding 21 of the transformer 2 to match the phase of the AC voltage of the power source PS, the phase continuity of the AC voltage when the circuit breaker is turned on is ensured.

For example, the second power conversion device 4 may ensure phase continuity of the AC voltage by supplying the third AC power with a voltage phase that causes the phase of the AC voltage generated in the primary winding 21 of the transformer 2 to match the phase of the AC voltage of the power source PS.

In addition to a phase difference caused by the second power conversion device 4 not being synchronized with the power source PS described above, there may be a fixed phase difference between the windings of the transformer 2, which depends on a wiring form of each winding. In this case, the control device 10 may include a phase difference due to a wiring configuration of the primary winding 21 and tertiary winding 23 of the transformer 2 in conditions for phase adjustment, and may cause a phase of an AC voltage generated in the primary winding 21 of the transformer 2 to match the phase of the AC voltage of the power source PS.

The second power conversion device 4 may supply, for example, the third AC power with a voltage phase that causes the phase of the AC voltage generated in the primary winding 21 to match the phase of the AC voltage of the power source PS, on the basis of the phase difference due to the wiring configuration of the primary winding 21 and tertiary winding 23 of the transformer 2. This allows the second power conversion device 4 to generate third AC power synchronized with the power source PS.

The power conversion system 1 in the embodiment described above includes the transformer 2, the first power conversion device 3, the second power conversion device 4, and the control device 10. The transformer 2 includes the primary winding 21, the secondary winding 22, and the tertiary winding 23, which are magnetically coupled to one another. The primary winding 21 of the transformer 2 is connected to the power source PS via a switch. The first power conversion device 3 includes the rectifier 31 and a smoothing capacitor 32 (the capacitive element) for rectifying and smoothing the AC power received from the secondary winding 22. The first power conversion device 3 uses the smoothed DC power to generate power to be supplied to a load. The second power conversion device 4 generates third AC power by switching a semiconductor switching element. The second power conversion device 4 supplies the third AC power to the tertiary winding 23 during a period from when the circuit breaker 9 is turned off to when the circuit breaker 9 is turned on. The third AC power is supplied to the tertiary winding 23 at least during the period from when the circuit breaker 9 is turned off to when the circuit breaker 9 is turned on. The control device 10 (control unit) controls the first power conversion device 3, the second power conversion device 4, and the circuit breaker 9. This makes it possible to reduce a current that flows when the main circuit is activated.

The following are known as comparative examples of measures during initial charging.

A configuration exemplified below is an initial charging method in which a smoothing capacitor is charged to a certain extent via a current reducer or the like, and then the current reducer or the like is shorted.
(1) A measure using an initial charging circuit (for example, a soft-start circuit) that supplies DC power to a DC bus in the first power conversion device 3.
(2) A measure that supplies AC power to an AC bus on a power source side of the first power conversion device 3 via an AC reactor (ACL) and an electromagnetic contactor (VCS).
(3) A measure that supplies AC power to the tertiary winding 23 of the transformer 2 via a current reducing resistor.

As described above, there are constituents for performing the initial charging of the capacitor 32, but in either method, it is not easy to ensure the continuity of an AC voltage waveform output from the secondary winding 22 of the transformer 2 when a supply from the main power source to the main circuit is started. For this reason, at a stage when the supply from the main power source to the main circuit is started, an inrush current occurs in the capacitor 32.

In contrast, in a case of this embodiment, the second power conversion device 4 generates third AC power by switching a semiconductor switching element. For this reason, the second power conversion device 4 supplies the third AC power to the tertiary winding 23 at least during the period from when the circuit breaker 9 is turned off to when the circuit breaker 9 is turned on. This makes it possible to adjust an amplitude of an AC voltage waveform and provide protection by limiting a current.

### (Second embodiment)

A second embodiment will be described with reference to FIGS. 1 and 3 described above.

FIG. 3 is a diagram for describing initial charging in the embodiment.

A difference between FIG. 3 and FIG. 2 is that a column for controlling the fan 8 has been added to a bottom of FIG. 3.

At the time t2, the control device 10 finishes the initial charging in the initial charging mode of the second power conversion device 4, and turns on the circuit breaker 9 to start supplying power from the power source PS.

At a time t3 after the circuit breaker 9 is turned on, the supply of the third AC power from the second power conversion device 4 to the tertiary winding 23 stops.

At a time t4, the control device 10 switches the switch 7 so that power can be supplied from the second power conversion device 4 to the fan 8. The control device 10 controls a speed of the second power conversion device 4 under V/f control or the like to operate the fan 8. This fan 8 is used for cooling the transformer 2, the first power conversion device 3, and the like. By controlling the speed of the fan 8 based on an ambient detection temperature, it is possible to adjust the speed of the fan 8 according to a degree of a temperature rise.

The second power conversion device 4 may use, for example, the fourth AC power to improve a cooling efficiency of at least one of the transformer 2 and the first power conversion device.

According to at least one of the embodiments described above, the power conversion system includes a transformer, a first power conversion device, and a second power conversion device. The transformer includes a primary winding, a secondary winding, and a tertiary winding that are magnetically coupled to each other. The primary winding of the transformer is connected to a power source PS via a switch. The first power conversion device includes a rectifier and a smoothing capacitive element for rectifying and smoothing the AC power received from the secondary winding. The first power conversion device generates power to be supplied to a load using the smoothed DC power. The second power conversion device generates third AC power by switching a semiconductor switching element. The second power conversion device supplies the third AC power to the tertiary winding at least during a period from when the circuit breaker is turned off to when the circuit breaker is turned on. The control unit controls the first power conversion device, the second power conversion device, and the circuit breaker. This makes it possible to reduce a current that flows when a main circuit is activated.

Although several embodiments of the present invention have been described, these embodiments are presented as examples and are not intended to limit the scope of the invention. These embodiments can be embodied in various other forms, and various omissions, substitutions, and modifications can be made within a range not departing from the gist of the invention. These embodiments and modifications thereof are included in the scope of the invention and its equivalents as described in the claims, as well as in the scope and gist of the invention.

### REFERENCE SIGNS LIST

1 Power conversion system
2 Transformer
3 First power conversion device
4 Second power conversion device
8 Fan
9 Circuit breaker
10 Control device (control unit)
12 CPU (Control unit)
PS Power source

## Claims

1. A power conversion system comprising:
a transformer which has a primary winding, a secondary winding, and a tertiary winding that are magnetically coupled to each other, and in which the primary winding is connected to a power source via a circuit breaker;
a first power conversion device which has a rectifier and a smoothing capacitive element for rectifying and smoothing AC power received from the secondary winding, and generates power to be supplied to a load using smoothed DC power;
a second power conversion device configured to generate third AC power by switching a semiconductor switching element, and to supply the third AC power to the tertiary winding at least during a period from when the circuit breaker is turned off to when the circuit breaker is turned on; and
a control unit configured to control the first power conversion device, the second power conversion device, and the circuit breaker.

2. The power conversion system according to claim 1,
wherein the second power conversion device limits a current value of the third AC power to a value that does not cause magnetic saturation of the transformer.

3. The power conversion system according to claim 2,
wherein the second power conversion device generates an AC voltage adjusted to limit the current value of the third AC power.

4. The power conversion system according to claim 3,
wherein the second power conversion device supplies the third AC power with a voltage phase that matches a phase of an AC voltage generated in the primary winding with a phase of an AC voltage of the power source on the basis of a phase difference due to a wiring configuration of the primary winding and the tertiary winding of the transformer.

5. The power conversion system according to claim 2,
wherein the second power conversion device generates the third AC power synchronized with the power source.

6. The power conversion system according to claim 5,
wherein the control unit turns on the circuit breaker when a result of identifying a voltage applied to any of windings of the transformer after the third AC power is supplied to the tertiary winding satisfies a predetermined condition.

7. The power conversion system according to claim 4 or 5,
wherein the second power conversion device interrupts the supply of the third AC power from the second power conversion device to the tertiary winding after the circuit breaker is turned on.

8. The power conversion system according to claim 4 or 5,
wherein the second power conversion device generates fourth AC power by switching the semiconductor switching element, and uses the fourth AC power to increase a cooling efficiency of at least one of the transformer and the first power conversion device.

9. A control method of a power conversion system that includes a transformer which has a primary winding, a secondary winding, and a tertiary winding that are magnetically coupled to each other, and in which the primary winding is connected to a power source via a circuit breaker, and a first power conversion device which has a rectifier and a smoothing capacitive element for rectifying and smoothing AC power received from the secondary winding, and generates power to be supplied to a load using the smoothed DC power, comprising:
generating third AC power by switching a semiconductor switching element of a second power conversion device, and supplying the third AC power to the tertiary winding during a period from when the circuit breaker is turned off to when the circuit breaker is turned on.
